# EUROPÄISCHE PATENTSCHRIFT

(11) **EP 1 179 151 B1**
(45) Veröffentlichungstag und Bekanntmachung des Hinweises auf die Patenterteilung: **02.04.2003**
(21) Anmeldenummer: 00909171.1
(22) Anmeldetag: 15.02.2000
(51) Int. Cl.: F16K 1/00

(54) **AUFBLASBARE DICHTUNG**
INFLATABLE SEAL
JOINT GONFLABLE

(30) Priorität: 23.02.1999 DE 19907679
(43) Veröffentlichungstag der Anmeldung: 13.02.2002
(73) Patentinhaber: Federhen, Bernd, 57078 Siegen (DE)
(72) Erfinder: Federhen, Bernd, 57078 Siegen (DE)
(74) Vertreter: Hiebsch, Gerhard F., Dipl.-Ing.
(86) Internationale Anmeldenummer: EP0001213
(87) Internationale Veröffentlichungsnummer: WO00050790

(56) Entgegenhaltungen:
- DE-A- 2 623 822
- GB-A- 943 233
- GB-A- 1 447 628

## Beschreibung

Die Erfindung betrifft eine aufblasbare Dichtung für eine Vorrichtung zur pneumatischen Förderung, insbesondere eine Dichtung an einem Ventil für Schüttgut, nach dem Oberbegriff des Patentanspruches 1.

Es ist bekannt, Ventile für Schüttgüter mittels aufblasbarer Dichtungen abzudichten; dabei werden elastische ringförmige Dichtkörper mittels Druckluft gegen einen Ventilkörper gedrückt. Die Ventilkörper können Flachschieberplatten mit Linear- oder Schwenkantrieb sein, aber auch kugelige oder kalottenartige Dichtkörper, die mittels Schwenkantrieb bewegt werden.

So offenbart die GB-A-1 447 628 einen schlauchartigen Dichtungsring mit einem Teil des Ringinnenraumes ausfüllendem Ringeinsatz aus starrem Werkstoff; jenen starren Ringeinsatz durchsetzt ein Zufuhrkanal als Zuleitung für Luft als Druckmedium zu einem zur Innenseite eines Werkstoffstreifens offenen Innernaum. Bei Druckaufbau wird eine mit Rippen versehene Dichtfläche gegen einen Dichtungspartner gedrückt, nämlich eine Gleitplatte, welche eine kreisförmige Mündung verschließt bzw. zu öffnen vermag. Der Klemmring wird durch eine im Zenit der dichtungsbefindlichen Öffnung eingeschoben, dann werden beide Teile in eine umlaufende Nut in einem Schiebergehäuse eingefügt und mit Schrauben verspannt. Jene Mündung ist mit einem der Wand benachbarten Abstreifer ausgestattet, der nicht Teil der Dichtung ist.

Die DE 26 23 822 A1 bietet einen vakuumdichtenden Verschluss für eine vertikale, von staubhaltigen Produkten durchströmte Leitung mit einer kreisförmigen Erweiterung an, in welcher als den Durchgang regelndes Verschlusselement ein Rotor exzentrisch lagert und dabei der Mündung des einen Leitungsabschnitts in die Leitungserweiterung anliegt. Dort findet sich eine im Querschnitt etwa U-förmige Dichtung mit auf ihrer dem Rotor zugewandten Seite vorgesehenen Längsrippen; die so ausgebildete Dichtfläche bildet im geschlossenen Zustand mit dem Rotor eine Labyrinthdichtung. Im Dichtungsinnenraum ist ein ringförmiger Metalleinsatz mit zumindest einem Kanal oder einem Ringraum vorgesehen, dessen untere Öffnung oberhalb der dem Rotor zugewandten Dichtungsfläche mündet und über einen Druckluftkanal mit Druckluft beaufschlagt wird, so dass die erwähnten Längsrippen der Dichtung in geschlossenem Zustand des Verschlusses an den Rotor angepresst werden können. An die äußeren Seitenflächen der U-förmigen Dichtung schmiegen sich ringförmige Metalleinfassungen an, welche an die Dichtung anvulkanisiert sind, um keine staubhaltigen Spalten entstehen zu lassen.

Die DE-PS 1 600 989 beschreibt einen Flachschieber mit zur pneumatischen Förderung staubförmigen bis körnigen Gutes mit einer Paarung von aufblasbaren Dichtringen, die jeweils in einer umlaufenden Nut hinterschnitten trapezförmigen Querschnittes lagern sowie zum Nutgrund hin offen ist; die DE 40 28 182 A1 stellt solche Dichtelemente als schlauchartige Dichtungen heraus, die in umlaufenden Nuten lagern, mittels Druckluft gespannt und mittels Unterdruck vom Dichtelement gelöst werden können. Die DE 26 607 686 C3 zeigt einen in einer umlaufenden Nut befestigten, zum Nutgrund hin offenen aufblasbaren Dichtring C-förmigen Querschnittes an einer Ventilanordnung.

In der DE 41 14 901 A1 werden am Rücken offene, in umlaufenden Nuten gelagerte aufblasbare Dichtringe offenbart, die am inneren und äußeren Umfang durch Formringe zu fixieren sind.

Die EP 114 278 B1 betrifft eine Absperrvorrichtung für pneumatische Fördersysteme mit zweiteiligem, durch einen aufblasbaren Dichtring abgedichtetem, linear angetriebenem Flachschieber. Hier bietet der in einer umlaufenden Nut lagernde Dichtring einen C-förmigen, am Rücken offenen Querschnitt und wird mittels Fixierelementen in der Ringnut festgehalten. Ein Vorabstreifer ist als zusätzliches Bauteil vorgesehen.

Als Dichtelemente in Rohrweichen verwendete aufblasbare Dichtringe ruhen nach EP 0 507 127 A1 in einer umlaufenden Nut und werden in dieser durch Schrauben gehalten, deren Schraubköpfe in einem losen Klemmring im Inneren des Dichtkörpers lagern.

Die aufblasbaren Dichtungen nach dem Stand der Technik bedürfen zu ihrem Einbau in Ventile, Weichen od.dgl. einer umlaufenden Nut. In dieser Nut muss die Dichtung -- um luftdicht zu sein -- mit definierten Passungen eingebaut werden. Oder es sind zusätzliche innere oder äußere Klemmstücke notwendig, die mit der elastischen Dichtung nicht fest verbunden sind. Die Nuten, in die diese Dichtungen eingebaut werden, erfordern an diesen Stellen große Wanddicken der Gehäuse.

Zum betriebssicheren Einbau ist eine hohe Präzision und Sorgfalt dafür qualifizierter Personen notwendig. Zusatzlich erforderliche Fixier- oder Stützelemente machen derartige Dichtungen zudem teuer.

Falls die Ventilkörper, gegen welche die aufblasbaren Dichtungen drücken sollen, bei ihrer Schließbewegung abgestreift werden sollen, sind zusätzliche Abstreifer notwendig. Zudem erfordert der druckdichte Anschluss der Betätigungsdruckluft für diese Dichtelemente weitere zusätzliche Dichtmaßnahmen an den Anschlussstellen.

In Kenntnis dieser Gegebenheiten hat sich der Erfinder die Aufgabe gestellt, eine aufblasbare Dichtung zu schaffen, deren Einbau in Ventile, Weichen und ähnliche Bauteile zur Behandlung von Schüttgut od.dgl. Stoffen einfach möglich ist. Desweiteren soll der druckdichte Anschluss des Druckmediums oder Betätigungsmittels sicher und billig erfolgen können. Umlaufende Nuten zur Aufnahme der Dichtung sollen entbehrlich sowie Abstreiforgane in die Dichtung integrierbar sein. Als weiteres Ziel ist vorgesehen, die aufblasbare Dichtung sowohl für Flachschieber als auch für kugelige oder anders gekrümmte Ventilkörper geeignet zu machen.

Zur Lösung dieser Aufgabe führt die Lehre des unabhängigen Anspruches; die Unteransprüche geben günstige Weiterbildungen an.

Erfindungsgemäß ist der formstabile Innenkörper aus festem Werkstoff mit dem aus elastischem Werkstoff geformten Außenteil außerhalb der Dichtfläche chemisch oder physikalisch haftend verbunden. Zudem soll zumindest eine Zuleitung für ein Druckmedium zu einem zur Innenseite des Basisoder Werkstoffstreifens offenen Innenraum des Innenkörpers vorhanden sein, in dem Einrichtungen zur Aufnahme von Befestigungselementen vorgesehen sind, beispielsweise Schraublöcher für Befestigungsschrauben, wobei in wenigstens einem Befestigungselement des Innenkörpers ein mit einem Druckmittelanschluss verbindbarer Kanal verläuft, der zum Basis- oder Werkstoffstreifen des Außenteils hin often ist.

Diese aufblasbare Dichtung umfasst also im wesentlichen den aus elastischem Werkstoff geformten Außenteil sowie den darin eingebetteten Innenkörper aus festem Material, dem in Abstand der als bewegbare Membrane gestaltete Basisstreifen gegenübersteht. Die Trennung kann etwa durch Trennmittelauftrag, beispielsweise Wachs oder PTFE-Spray, bei der Herstellung der Dichtung auf diese Fläche des Innenkörpers oder durch geeignete Materialwahl für letzteren -- beispielsweise Polytetrafluorethylen (PTFE) -- erfolgen.

Das Aufblasen der Dichtung beschränkt sich vorteilhafterweise auf den dem Ventilkörper zugewandten Bereich; die anderen den Innenkörper umgebenden Teile des elastischen Außenteils sind -- wie erwähnt -- chemisch oder physikalisch mit dem festen Innenkörper verbunden. Dem Aufblasvorgang dient erfindungsgemäß zumindest eine Zuleitung für ein Druckmedium, das zu einem zur Innenseite des Basisoder Werkstoffstreifens offenen Innenraum des Innenkörpers -- jenem erwähnten Spaltraum -- geleitet wird.

Als Druckmedium für den Aufblasvorgang eignen sich Luft -aber auch andere Gase -- und Flüssigkeiten, die Zuleitung dieses Betätigungsmittels erfolgt bevorzugt durch die beschriebenen Befestigungselemente, die dazu mit einem axialen Kanal versehen sind.

Nach einem weiteren Merkmal der Erfindung soll der membranartig verformbare Basis- oder Werkstoffstreifen des Außenteils im Bereich der Dichtfläche zur Erhöhung der Dichtwirkung profiliert sein, bevorzugt mittels aus der Dichtfläche herausgeformter rippenartiger Ausformungen. Auch hat es sich als günstig erwiesen, die Firstfläche oder obere Dichtfläche des Außenteils mit wenigstens einer umlaufenden Dichtkante zu versehen, insbesondere mit einem Paar von Dichtkanten.

Um das erwähnte Abstreiforgan zu integrieren, wird dieses nach einem weiteren Merkmal der Erfindung als Abstreifrippe dem membranartig verformbaren Basisstreifen mit Dichtfläche zugeordnet, insbesondere ihm einstückig angeformt.

Was den Einsatz von Werkstoffen anlangt, so soll der Außenteil aus gummielastischem Werkstoff -- insbesondere aus gieß- oder spritzgießbaren Polyurethanen -- geformt werden, der Innenkörper etwa aus Polytetrafluorethylen (PTFE) oder aber aus Metall. Im letztgenannten Fall wird dessen dem Basis- oder Werkstoffstreifen des Außenteils zugeordnete Fläche mit einem Trennmittel versehen.

Als günstig hat es sich erwiesen, an/in dem festen Innenkörper Einrichtungen zur Verankerung von Befestigungselementen vorzusehen -- beispielsweise Schraublöcher für Befestigungsschrauben --, mit denen die Dichtung an ihren Dichtungspartner herangeführt zu werden vermag. In diesen Befestigungsschrauben verläuft zudem ein mit einem Druckmittelanschluss verbundener Kanal, der gegebenenfalls zum Basis- oder Werkstoffstreifen des Außenteils hin offen ist.

Es ist auch vorteilhaft, durch den festen Innenkörper Öffnungen anzuordnen, durch welche die elastischen Bereiche des Außenteils, die nicht vom Innenkörper getrennt sein sollen, miteinander verbunden werden.

Dank der Form und Anordnung der auf den Ventilkörper wirkenden Dichtfläche kann die aufblasbare Dichtung für den jeweiligen Ventilkörper passend hergestellt werden. Das Prinzip der Dichtung ist geeignet für Dichtungen mit ringförmiger, gerade gestreckter oder gebogener Gestalt. So werden auch Dichtungen vorgeschlagen, bei denen die Form der profilierten Dichtfläche des Außenteils der Gestalt eines zugeordneten Ventilkörpers angepasst wird, wobei etwa der Querschnitt des Innenkörpers dreiecksförmig werden kann; die profilierte Dichtfläche des Außenteils ist darin in einem flachen Winkel gegenüber dessen Firstfläche geneigt.

Alle Vorzüge lassen sich z.B. durch Herstellen der aufblasbaren Dichtung im drucklosen Polyurethan-Gießverfahren billig verwirklichen.

Weitere Vorteile und Einzelheiten der Erfindung ergeben sich aus der nachfolgenden Beschreibung bevorzugter Ausführungsbeispiele sowie anhand der Zeichnung; diese zeigt in:
- Fig. 1:: einen Längsschnitt durch ein Ventilgehäuse mit Dichtung in drucklosem, entspanntem Zustand;
- Fig. 2:: einen vergrößerten Ausschnitt aus Fig. 1 in anderer Betriebsstellung;
- Fig. 3:: einen Querschnitt durch eine für einen Flachschieber vorgesehene aufblasbare Dichtung;
- Fig. 4:: einen Querschnitt durch eine aufblasbare Dichtung für einen gewölbten Schieber;
- Fig. 5:: einen schematisierten Querschnitt durch eine Dichtung für einen zylinderförmigen Ventilkörper.

An einem Durchbruch 10 eines Ventilgehäuses 12, dessen Mittelachse mit A bezeichnet und das in seinem Inneren -- in Abstand h zu seiner durchbruchnahen Innenfläche 14 -- mit Auflageflächen 16 für das Schieberblatt 17 eines Flachschiebers versehen ist, verläuft an der Innenfläche 14 eine Dichtung 20. Diese besteht aus einem festen Innenkörper 22 sowie einem diesen umgebenden elastischen Außenteil 24 aus Polyurethan od.dgl. Werkstoff. Der Innenkörper 22 ist beispielhaft aus Stahl geformt und hier von etwa L-förmigem Querschnitt; dessen langer Querschnittsschenkel verläuft -zur Mittelachse A gerichtet -- parallel zur Oberfläche 18 des Schieberblattes 17 und bietet eine ebene Unterfläche 23 an.

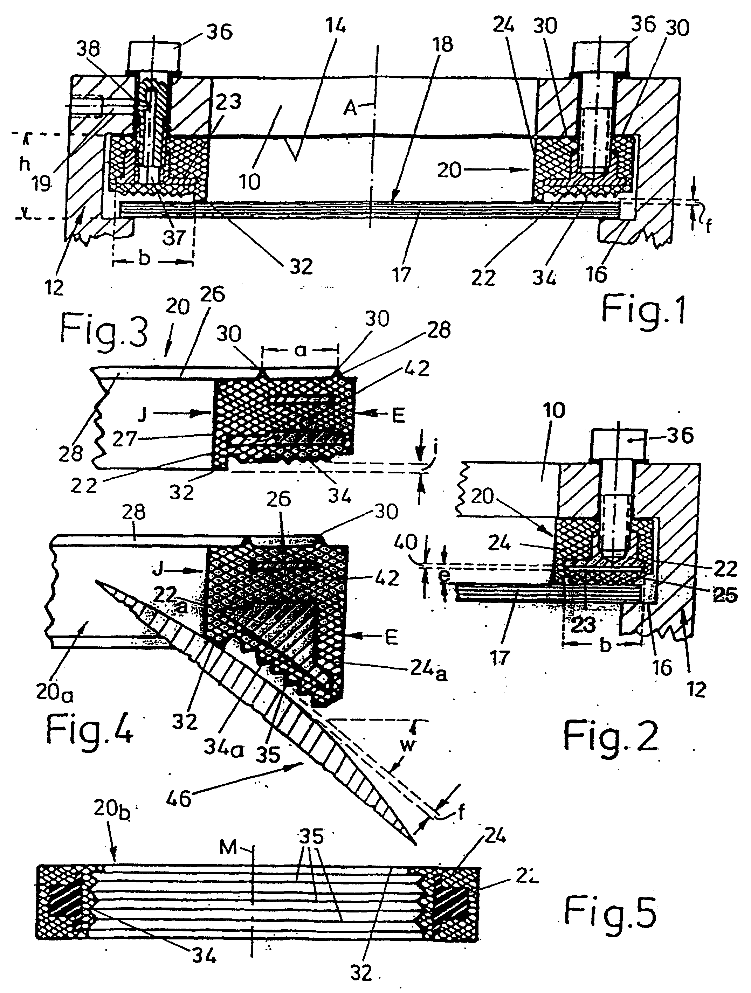

Der Außenteil 24 der Dichtung 20 ist an seiner oberen Firstfläche 26 (Fig. 3), also zur Innenfläche 14 des Ventilgehäuses 12 hin, mit zwei -- in Mittelabstand a voneinander verlaufenden -- Wulstanformungen 28 dreieckförmigen Querschnitts versehen, deren Spitzen zwei Dichtkanten 30 bilden. Unterhalb des Innenkörpers 22 enthält der Außenteil 24 im Anschluss an eine innere Abstreifrippe 32 einen zu jener Unterfläche 23 des Innenkörpers 22 parallelen Basisstreifen 25 der Breite b sowie der Dicke e mit außenseitig profilierter Dichtfläche 34; der Basisstreifen 25 wirkt als eine Art bewegbarer Membrane und ist vom Innenkörper 22 getrennt. Im Falle eines metallischen Innenkörpers 22 ist dessen dem Basisstreifen 25 nahe Unterfläche 23 mit einem Trennmittel versehen -- etwa Wachs oder einem PTFE-Spray --, das vor dem Guss des Polyurethans auf die Flächen des Innenkörpers 22 aufgetragen wird, welche nicht mit dem elastischen Außenteil 24 verkleben sollen.

In Fig. 1 ragt die Abstreifrippe 32 um ein Kragmaß i (s. Fig. 3) von der profilierten Dichtfläche 34 ab und ruht auf der zu dichtenden Oberfläche 18 des Schieberblattes 17, welche sie während der Schieberbewegung überfährt. Die profilierte Dichtfläche 34 steht zu jener Oberfläche 18 des Schieberblattes 17 in einem Abstand f.

Im Innenkörper 22 der Dichtung 20 sind die Enden von -- das Ventilgehäuse 12 durchgreifenden -- Befestigungsschrauben 36 in Schraublöchern 37 verankert, welche die Dichtung 20 gegen die Innenfläche 14 des Ventilgehäuses 12 spannen. Durch einen axialen Kanal 38 in den Befestigungsschrauben 36 kann über einem Druckmittelanschluss 19 des Ventilgehäuses 12 ein Druckmedium in die Schraublöcher 37 einströmen, etwa ein gespanntes Gas, Druckluft oder Flüssigkeit. Des Druckmediums Zufuhr wird von jenen Dichtkanten 30 gegen die Innenfläche 14 des Ventilgehäuses 12 abgedichtet. Im übrigen werden die von der oberen Dichtfläche 26 aufragenden Dichtkanten 30 beim Anziehen der Befestigungsschrauben 36 zum Erreichen der Dichtwirkung entsprechend Fig. 1, 2 verformt.

In Fig. 2 ist dargestellt, wie der membranartig bewegliche Basisstreifen 25 mit der profilierten Dichtfläche 34 des Außenteils 24 der Dichtung 20 durch das zugeführte Druckmittel oder -medium auf die zu dichtende Oberfläche 18 des Schieberblattes 17 gepresst wird. Zwischen dem festen Innenkörper 22 der Dichtung 20 und deren elastischem Außenteil 24 bildet sich dabei ein Spalt 40. Die anderen Innenflächen des Außenteils 24 haften am Innenkörper 22, weshalb im Ventilgehäuse 12 zur Aufnahme der Dichtung 20 keine Nut benötigt wird, und es bedarf nur geringer Anforderungen an die Maßgenauigkeit der Dichtung 20.

Einen Querschnitt durch die Dichtung 20 in einen anderen Abschnitt bietet Fig. 3 an. Durch im Innenkörper 22 befindliche Öffnungen 42, deren Längsachse bei Q angedeutet ist, ist der innere Bereich J mit dem äußeren Bereich E der Dichtung 20 verbunden. Dadurch wird die Haftung des elastischen Außenteils 24 an dem festen Innenkörper 22 unterstützt.

Fig. 4 zeigt beispielhaft den Querschnitt einer Dichtung 20ₐ mit querschnittlich dreiecksartigem Innenkörper 22ₐ, deren profilierte Dichtfläche 34ₐ in einem Winkel w zu ihrer First- oder oberen Dichtfläche 26 nach außen geneigt ist und die gegen einen bei 46 angedeuteten gewölbten Ventilkörper dichten soll. Letzterer kann beispielsweise die Kugel eines Kugelhahnes sein oder die Kalotte eines Kalottenschwenkschiebers.

Der Fig. 5 ist eine Dichtung 20_{b} im Diametralschnitt zu entnehmen, die gegen einen -- nicht dargestellten -- zylinderförmigen Ventilkörper abdichten soll. Bei dieser ringförmigen Dichtung 20_{b} verläuft die durch Wulstkanten 35 profilierte Dichtfläche 34 parallel zur Ringachse M.

## Patentansprüche

1. Aufblasbare Dichtung für eine Vorrichtung zur pneumatischen Förderung, insbesondere Dichtung (20) an einem Ventil (12) für Schüttgut, mit einer einem Dichtpartner (17, 46) anlegbaren äußeren Dichtfläche (34, 34ₐ) an einem Basis- oder Werkstoffstreifen (25) eines Außenteils (24) aus elastischem Werkstoff, in dem ein Innenkörper (22, 22ₐ) aus festem Werkstoff angebracht ist, der von einer Firstfläche (26) des Außenteils übergriffen ist, wobei dem Außenteil (24) die in der Art einer beweglichen Membrane ausgebildete und gegenüber dem Innenkörper getrennte Dichtfläche zugeordnet sowie ein Spaltraum (40) zwischen dem Basis- oder Werkstoffstreifen des Außenteils und dem Innenkörper vorgesehen ist,
**dadurch gekennzeichnet,**
**dass** der Innenkörper (22, 22ₐ) mit dem Außenteil (24) außerhalb der Dichtfläche (34, 34ₐ) chemisch oder physikalisch haftend verbunden ist.

2. Dichtung nach Anspruch 1, **dadurch gekennzeichnet, dass** zumindest eine Zuleitung für ein Druckmedium zu einem zur Innenseite des Basis- oder Werkstoffstreifens offenen Innenraum des Innenkörpers vorgesehen ist, in dem Einrichtungen zur Aufnahme von Befestigungselementen vorgesehen sind, beispielsweise Schraublöcher (37) für Befestigungsschrauben (36), wobei in wenigstens einem Befestigungselement des Innenkörpers ein mit einem Druckmittelanschluss verbindbarer Kanal verläuft, der zum Basis- oder Werkstoffstreifen des Außenteils hin offen ist.

3. Dichtung nach Anspruch 2, **dadurch gekennzeichnet, dass** die von den Befestigungselementen (36) durchdrungene Außenfläche (26) des Außenteils (24), insbesondere die Firstfläche oder obere Dichtfläche (26) des Außenteils (24), mit wenigstens einer umlaufenden Dichtkante (30) versehen ist, bevorzugt mit einem Paar von Dichtkanten.

4. Dichtung nach einem der Ansprüche 1 bis 3, **gekennzeichnet durch** Öffnungen (42) im Innenkörper (22, 22ₐ), mittels deren die diesem anliegenden elastischen Bereiche (E, J) des Außenteils (24) verbunden sind.

5. Dichtung nach einem der Ansprüche 1 bis 4, **dadurch gekennzeichnet, dass** dem membranartig verformbaren Basis- oder Werkstoffstreifen (25) mit Dichtfläche (34, 34ₐ) zumindest ein Abstreifelement, insbesondere eine Abstreifrippe (32), zugeordnet, bevorzugt angeformt, ist.

6. Dichtung nach einem der Ansprüche 1 bis 5, **dadurch gekennzeichnet, dass** der Außenteil (24) aus gummielastischem Werkstoff, insbesondere aus Polyurethan, geformt und gegebenenfalls im drucklosen Polyurethan-Gießverfahren hergestellt ist.

7. Dichtung nach Anspruch 1, **dadurch gekennzeichnet, dass** der Innenkörper (22, 22ₐ) aus Polytetrafluorethylen (PTFE) gefertigt ist.

8. Dichtung nach einem der Ansprüche 1 bis 7, **dadurch gekennzeichnet, dass** der Innenkörper (22, 22ₐ) aus Metall besteht und dessen dem Basis- oder Werkstoffstreifen (25) des Außenteils (24) zugeordnete Fläche (23) mit einem Trennmittel versehen ist.

9. Dichtung nach einem der Ansprüche 1 bis 8, **gekennzeichnet durch** eine etwa L-förmige Querschnittsform des Innenkörpers (22), dessen langer Schenkel zur Mittelachse (A) der Vorrichtung (12) gerichtet ist und etwa parallel zur Dichtfläche (34) des Außenteils (24) verläuft.

10. Dichtung nach einem der Ansprüche 1 bis 8, **dadurch gekennzeichnet, dass** der Querschnitt des Innenkörpers (22ₐ) dreiecksförmig ist.

11. Dichtung nach einem der Ansprüche 1 bis 10, **dadurch gekennzeichnet, dass** die profilierte Dichtfläche (34ₐ) des Außenteils (24ₐ) in einem Winkel (w) zu dessen Firstfläche (26) geneigt ist.

## Claims

1. Inflatable seal for a pneumatic conveying device, in particular seal (20) on a valve (12) for bulk material, comprising an outer sealing surface (34, 34ₐ) on a base strip or strip of material (25) of an outer part (24) made of elastic material which can be applied to a sealing partner (17, 46), an inner body (22, 22ₐ) made of solid material being mounted in the outer part and being overlapped by a top surface (26) thereof, the sealing surface designed in the form of a movable membrane and separated from the inner body being associated with the outer part (24) and a gap (40) being provided between the base strip or strip of material of the outer part and the inner body, **characterised in that** the inner body (22, 22ₐ) is chemically or physically bonded to the outer part (24) outside the sealing surface (34, 34ₐ).

2. Seal according to claim 1, **characterised by** at least one line for feeding a hydraulic fluid to an inner space of the inner body open towards the inner face of the base strip or strip of material, in which devices for receiving fixing elements are provided, e.g. screw holes (37) for fixing screws (36), a duct which can be connected to a hydraulic fluid port and is open towards the base strip or strip of material of the outer part extending in at least one fixing element of the inner body.

3. Seal according to claim 2, **characterised in that** the outer surface (26) of the outer part (24), in particular the top surface or upper sealing surface (26) of the outer part (24), traversed by the fixing elements (36) is provided with at least one circumferential sealing edge (30), preferably with a pair of sealing edges.

4. Seal according to one of claims 1 to 3, **characterised by** openings (42) in the inner body (22, 22ₐ) by means of which the elastic regions (E, J) of the outer part (24) bearing against the inner body are connected together.

5. Seal according to one of claims I to 4, **characterised in that** at least one stripping element, in particular a stripping rib (32) is associated with, preferably moulded on to the base strip or strip of material (25) with the sealing surface (34, 34ₐ) deformable like a membrane.

6. Seal according to one of claims 1 to 5, **characterised in that** the outer part (24) is moulded from rubbery-elastic material, in particular polyurethane, and may be produced by pressureless polyurethane casting.

7. Seal according to claim 1, **characterised in that** the inner body (22, 22ₐ) is made of polytetrafluoroethylene (PTFE).

8. Seal according to one of claims 1 to 7, **characterised in that** the inner body (22, 22ₐ) consists of metal and its surface (23) associated with the base strip or strip of material (25) of the outer part (24) is provided with a release agent.

9. Seal according to one of claims 1 to 8, **characterised by** an approximately L-shaped cross-sectional shape for the inner body (22), its longer arm being directed towards the centre axis (A) of the device (12) and extending approximately parallel to the sealing surface (34) of the outer part (24).

10. Seal according to one of claims 1 to 8, **characterised in that** the cross section of the inner body (22ₐ) is triangular.

11. Seal according to one of claims 1 to 10, **characterised in that** the profiled sealing surface (34ₐ) of the outer part (24ₐ) is inclined at an angle (w) relative to its top surface (26).

## Revendications

1. Joint gonflable pour un dispositif de transport pneumatique, notamment joint (20) sur une vanne (12) pour produits en vrac, avec une surface d'étanchéité extérieure (34, 34a) pouvant être placée contre un partenaire d'étanchéité (17, 46), prévue sur une bande de support ou de matériau (25) d'un élément extérieur (24) en matière élastique, dans lequel est placé un corps intérieur (22, 22a) en matière solide, qui est recouvert par une surface de faîte (26) de l'élément extérieur, dans lequel la surface d'étanchéité de type membrane mobile est associée à l'élément extérieur (24) et est séparée du corps intérieur, et un espace de séparation (40) est prévu entre la bande de support ou de matériau de l'élément extérieur et le corps intérieur,
**caractérisé en ce que**
l'extérieur de la surface d'étanchéité (34, 34a) le corps intérieur (22, 22a) est relié en adhérant chimiquement ou physiquement à l'élément extérieur (24).

2. Joint selon la revendication 1, **caractérisé en ce qu'**au moins une arrivée pour un fluide de pression est prévue vers un espace intérieur du corps intérieur ouvert vers la surface intérieure de la bande de support ou de matériau, espace dans lequel des dispositifs pour loger des éléments de fixation sont prévus, par exemple des trous filetés (37) pour des vis de fixation (36), dans lequel un canal pouvant être relié à un raccord de fluide de pression s'étend dans au moins l'un des éléments de fixation du corps intérieur, canal qui est ouvert vers la bande de support ou de matériau de l'élément extérieur.

3. Joint selon la revendication 2, **caractérisé en ce que** la surface extérieure (26) de l'élément extérieur (24) traversée par les éléments de fixation (36), notamment la surface de faîte ou la surface d'étanchéité supérieure (26) de l'élément extérieur, est pourvue d'au moins un bord d'étanchéité circulaire (30), de préférence d'une paire de bords d'étanchéité.

4. Joint selon l'une quelconque des revendications 1 à 3, **caractérisé par** des orifices (42) dans le corps intérieur (22, 22a), au moyen desquels sont reliées les zones élastiques (E, J) de l'élément extérieur (24) prenant appui sur celui-ci.

5. Joint selon l'une quelconque des revendications 1 à 4, **caractérisé en ce qu'**à la bande de support ou de matériau (25) déformable en forme de membrane comprenant la surface d'étanchéité, au moins un élément racleur, notamment une nervure racleuse (32), est associé, de préférence rapporté par moulage.

6. Joint selon l'une quelconque des revendications 1 à 5, **caractérisé en ce que** l'élément extérieur (24) est moulé à partir d'une gomme élastique, notamment de polyuréthane, et éventuellement réalisé à l'aide du procédé de coulée de polyuréthane sans pression.

7. Joint selon la revendication 1, **caractérisé en ce que** le corps intérieur (22, 22a) est réalisé en polytétrafluoréthylène (PTFE).

8. Joint selon l'une quelconque des revendications 1 à 7, **caractérisé en ce que** le corps intérieur (22, 22a) est en métal et **en ce que** la surface (23) de celui-ci associée à la bande de support ou de matériau (25) de l'élément extérieur, (24) est pourvue d'un isolant.

9. Joint selon l'une quelconque des revendications 1 à 8, **caractérisé par** une forme de section transversale du corps intérieur (22) sensiblement en L, dont la branche longue est orientée vers l'axe central (A) du dispositif (12) et s'étend sensiblement parallèlement à la surface d'étanchéité (34) de l'élément extérieur (24).

10. Joint selon l'une quelconque des revendications 1 à 8, **caractérisé en ce que** la section transversale du corps intérieur (22a) est triangulaire.

11. Joint selon l'une quelconque des revendications 1 à 10, **caractérisé en ce que** la surface d'étanchéité profilée (34a) de l'élément extérieur (24a) est inclinée selon un angle (w) par rapport à la surface de faîte (26) de celui-ci.
